(19) **Europäisches Patentamt**

**European Patent Office**

**Office européen des brevets**

(11) **EP 1 158 269 B1**

(12) **EUROPÄISCHE PATENTSCHRIFT**

(45) Veröffentlichungstag und Bekanntmachung des Hinweises auf die Patenterteilung:
**20.07.2005 Patentblatt 2005/29**

(51) Int Cl.⁷: **G01B 21/04**, G01B 5/008

(21) Anmeldenummer: **01112215.7**

(22) Anmeldetag: **18.05.2001**

(54) **Korrekturverfahren für Koordinatenmessgeräte**

Correction method for coordinate measuring machines

Procédé pour corriger des appareils de mesure de coordonnées

(84) Benannte Vertragsstaaten:
**DE FR GB IT**

(30) Priorität: **23.05.2000 DE 10025479**

(43) Veröffentlichungstag der Anmeldung:
**28.11.2001 Patentblatt 2001/48**

(60) Teilanmeldung:
**04023526.9 / 1 498 691**

(73) Patentinhaber: **Carl Zeiss Industrielle Messtechnik GmbH**
**73447 Oberkochen (DE)**

(72) Erfinder:
• **Lotze, Werner, Prof. Dr.**
**01309 Dresden (DE)**
• **Bernhardt, Ralf**
**73432 Aalen (DE)**

(74) Vertreter: **Henckell, Carsten**
**Carl Zeiss**
**Patentabteilung**
**73446 Oberkochen (DE)**

(56) Entgegenhaltungen:
EP-A- 0 684 448          CH-A- 681 913
US-A- 4 333 238          US-A- 5 007 006
US-A- 5 610 846

• Q ET AL: "Error compensation of touch trigger probes" MEASUREMENT, INSTITUTE OF MEASUREMENT AND CONTROL. LONDON, GB, Bd. 18, Nr. 1, 1. Mai 1996 (1996-05-01), Seiten 47-57, XP004040458 ISSN: 0263-2241

## Beschreibung

Die Erfindung betrifft ein Verfahren zur Korrektur der Meßergebnisse eines Koordinatenmeßgerätes, bei dem ein Werkstück kontinuierlich abgetastet wird und ein entsprechendes Koordinatenmeßgerät.

Ein derartiges Verfahren ist z.B. aus US 4 333 238 bekannt. Dort wird zur Kalibrierung die Tasterdurchbiegung bei unterschiedlichen Beschleunigungen gemessen und in einem Parameterfeld gespeichert. Diese Werte werden bei der Späteren Messung subtrahiert, um die Meßergebnisse zu horrigieren.

Weiterhin ist ein derartiges Verfahren bereits aus der EP 0 684 448 A2 bekannt. Hierin ist vorgesehen die dynamische Steifigkeit eines Tasters zu ermitteln, indem zunächst ein Lehrring oder eine Kalibrierkugel bei verschiedenen Geschwindigkeiten mit einem sehr steifen Taster abgetastet wird. Danach wird der Lehrring oder die Kalibrierkugel mit dem zu kalibrierrenden Taster auf die gleiche Weise wie mit dem sehr steifen Taster abgetastet. Aus den Differenzen der Meßwerte des sehr steifen Tasters und des zu kalibrierenden Tasters wird die dynamische Steifigkeit ermittelt, wobei hieraus in einem späteren Meßablauf für den betreffenden Taster dann unter Berücksichtigung der Beschleunigung des Tasters entsprechende Korrekturwerte ermittelt werden und die Meßergebnisse entsprechend Korrigiert werden.

Das in EP 0 684 448 beschriebene Verfahren hat in der Vergangenheit gute Ergebnisse erzielt. Bei den ständig steigenden Anforderungen an die Genauigkeit hat sich jedoch gezeigt, daß sich Meßfehler, die sich durch die dynamische Biegung von Tastern ergeben, mit dem beschriebenen Verfahren nur bis zu einem gewissen Grad korrigieren lassen.

Aufgabe ist es hiervon ausgehend ein verbessertes Verfahren zur Korrektur von Meßfehlern anzugeben, die sich aufgrund der dynamischen Verformung des Taststiftes beim Abtasten eines Werkstückes ergeben. Aufgabe ist es des weiteren ein entsprechendes Koordinatenmeßgerät anzugeben.

Die Aufgabe wird durch die Merkmale der unabhängigen Ansprüche 1 und 12 gelöst.

Die Besonderheit des erfindungsgemäßen Verfahrens ist darin zu sehen, daß das Paramterfeld, das die dynamische Steifigkeit des Tasters beschreibt, das Produkt des statischen Biegetensors des Tasters mit dem Massentensor des Tasters umfaßt.

Das Parameterfeld, welches die dynamische Steifigkeit des Tasters beschreibt, kann zusätzlich die Abweichungen bei Beschleunigung des Tasters normal zur Werkstückoberfläche beschreiben.

Durch die Korrektur der Meßergebnisse mit einem entsprechenden Parameterfeld können erheblich bessere Meßergebnisse erzielt werden. Ein sehr gutes Meßergebnis ergibt sich dann, wenn das Parmeterfeld beide der oben genannten Eigenschaften beschreibt, das heißt also, daß das Parameterfeld ein Teilfeld umfaßt, das das Produkt des statischen Biegetensors des Tasters mit dem Massentensor des Tasters ist, wie auch ein Teilfeld umfaßt, das nur die Abweichungen bei Beschleunigung des Tasters normal zur Werkstückoberfläche beschreibt.

Die Meßergebnisse können zusätzlich noch geringfügig verbessert werden, wenn das Parameterfeld zusätzlich noch ein Teilfeld umfaßt, das nur die Abweichungen bei tangentialer Beschleunigung des Tasters gegenüber der Werkstückoberfläche beschreibt.

Das Parameterfeld bzw. die Parameter des Paramterfeldes können hierbei entweder durch analytische Rechnung und/oder durch dynamische Kalibrierung bestimmt werden. Es ist hierbei zu beachten, daß für das Parameterfeld insbesondere dann, wenn es aus mehreren Teilfeldern besteht, zur Korrektur auch nur wenigstens eines der Teilfelder kalibriert werden muß.

Für den Fall, daß das Parameterfeld die Abweichungen bei Beschleunigung des Tasters normal zur Werkstückoberfläche beschreibt, können die Parameter des Parameterfeldes vorteilhaft durch kontinuierliche Abtastung eines rotationssymmetrischen Kalibrierkörpers mit unterschiedlichen Geschwindigkeiten bestimmt werden. Der rotationssymmetrische Kalibrierkörper ist dann vorteilhaft eine Kalibrierkugel, wobei zur Bestimmung der Paramter des Parameterfeldes wenigstens drei Großkreise mit unterschiedlichen Geschwindigkeiten abgetastet werden.

Wenn das Parameterfeld zusätzlich die Abweichungen bei tangentialer Beschleunigung des Tasters gegenüber der Werkstückoberfläche beschreibt, können die Parameter des Parameterfeldes bestimmt werden, indem eine gekrümmte Bahn auf einer Kalibrierebene abgetastet wird, die parallel zu den zu vermessenden Werkstückflächen ausgerichtet ist, und wobei die Abtastung nach wenigstens einem der nachfolgenden Prinzipien erfolgt:

- ein und dieselbe gekrümmte Bahn wird mit unterschiedlichen Geschwindigkeiten abgetastet oder
- die Bahn wird mit einer festen Geschwindigkeit abgetastet, wobei die Bahn unterschiedliche Krümmungen aufweist.

Die Parameter eines solchen Parameterfeldes, das die Abweichungen bei tangentialer Beschleunigung des Tasters gegenüber der Werkstückoberfläche beschreibt, können insbesondere durch Messung eines Kleinkreises an einer Kalibrierkugel mit unterschiedlicher Geschwindigkeit in mindestens einer Kalibrierebene bestimmt werden.

Die Meßpunkte, die beim Kalibrieren aufgenommen werden oder im späteren Meßbetrieb aufgenommen werden können in Abhängigkeit von der gemessenen Beschleunigung und/oder der gemessenen Meßkraft als gültig oder ungültig validiert werden. Zur Validierung kann ein Winkel zwischen Beschleunigungsvektor oder Meßkraftvektor und dem Normalenvektor der Werkstückoberfläche im Meßpunkt errechnet werden und ein Meßpunkt als gültig validiert werden, wenn der Winkel einen vordefinierten Wert unterschreitet oder überschreitet.

Die maximal zulässige Meßgeschwindigkeit des Koordinatenmeßgerätes kann vorteilhaft unter Berücksichtigung der dynamischen Steifigkeit des Tasters und der Tastermasse ermittelt werden.

Weitere Vorteile und Weiterbildungen der Erfindung ergeben sich aus der Beschreibung eines vorteilhaften Ausführungsbeispiels, das im Zusammenhang mit den Figuren beschrieben wird. Hierin zeigen:

Figur 1:      Koordinatenmeßgerät vom Portaltyp

Figur 2:      Schematische Darstellung von Beschleunigungszuständen die beim Abtasten längs einer beliebigen Bahn auftreten können

Figur 3:      rein schematischer Taststift (13)

Figur 4:      rein schematischer Taststift, der ähnlich zu dem aus Figur 3 ausgebildet ist, wobei das kegelstumpfförmige Bauteil (27) nach unten ausgerichtet ist.

Figur 5:      Darstellung der Verformung eines Taststiftes (16), wenn der Tastkopf (9) auf einer gekrümmten Bahn bewegt wird

Figur 6:      Abtasten einer Kreisbahn auf einer Kugel (18)

Figur 7:      Abtasten der Kreisbahn gemäß Figur 6 entlang einer ebenen Fläche eines Werkstückes (19)

Figur 8+9:    Erläuterung des Grundprinzips für die Kalibrierung der symmetrischen Dynamikmatrix ($D_s$)

Figur 10:     Erläuterung des Grundprinzips für die Kalibrierung der antisymmetrischen Matrix ($D_a$)

Figur 11:     Erläuterung des Grundprinzips einer Datenvalidierung bei der Durchführung der Kalibrierung

Figur 12:     Darstellung der zulässigen Meßgeschwindigkeit in Abhängigkeit von der dynamischen Steifigkeit

Figur 13:     Darstellung der zulässigen Meßgeschwindigkeit in Abhängigkeit von der Taststiftmasse

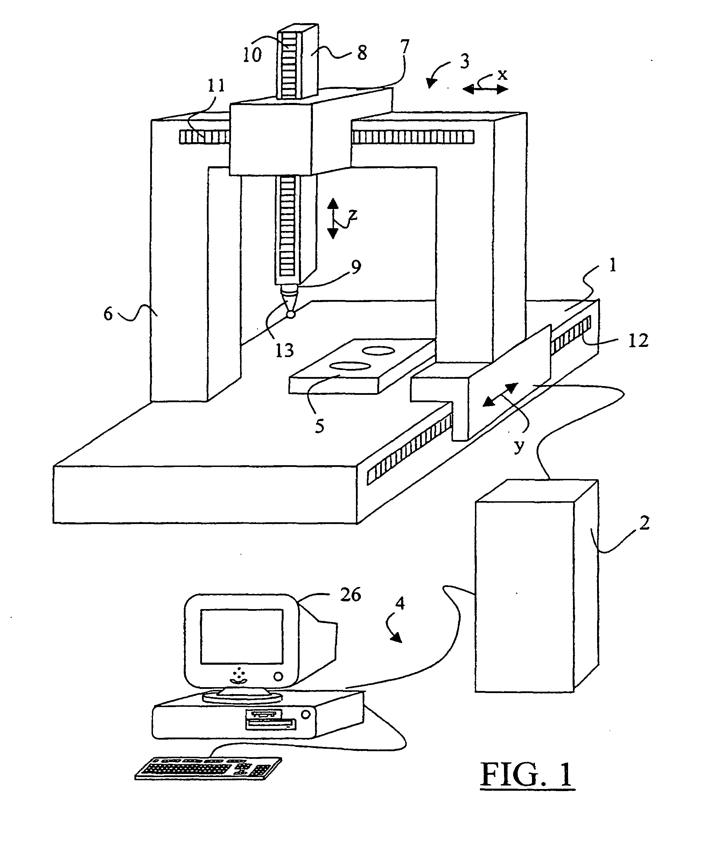

Figur 1 zeigt rein beispielhaft ein Koordinatenmeßgerät vom sogenannten Portaltyp. Das Koordinatenmeßgerät umfaßt einen Meßtisch (1) auf dem ein zu vermessendes Werkstück (5) gelagert ist. Das Koordinatenmeßgerät weist eine Mechanik (3) in Form einer Portalmechanik auf, über die ein Tastkopf (9) in den drei Koordinatenrichtungen (x,y,z) verfahren werden kann. Das Portal (6) der Mechanik (3) ist hierbei in einer ersten mit (y) bezeichneten Richtung beweglich gelagert. An der horizontalen Traverse des Portals (6) wiederum ist ein Querschlitten (7) in der mit (x) bezeichneten Richtung verfahrbar gelagert, der wiederum die vertikale Pinole (8) in der mit (z) bezeichneten Richtung verschieblich lagert. Am unteren Ende der Pinole (8) ist ein messender Tastkopf (9) befestigt. In den drei Koordinatenrichtungen (x,y,z) sind an der Mechanik (3) Maßstäbe (10,11,12) befestigt, die über hier nicht näher gezeigte Abtastköpfe abgetastet werden, so daß die sogenannte Maschinenposition ($x_M,y_M,z_M$), das heißt also die Position der Mechanik (3) und damit des Tastkopfes (9) in den drei Koordinatenrichtungen (x,y,z) erfaßt werden kann.

Der Tastkopf (9) wiederum weist eine in den drei Koordinatenrichtungen auslenkbare Tastkopfmechanik auf, über der Taststift (13) aus seiner Ruhelage in den Koordinatenrichtungen (x,y,z) gegenüber dem Tastkopf (9) ausgelenkt werden kann, wobei außerdem Meßeinrichtungen vorgesehen sind, über die die Taststiftauslenkung ($x_T,y_T,z_T$), also die Auslenkung des Taststiftes (13) gegenüber dem Tastkopf (9) in den drei Koordinatenrichtungen (x,y,z) gemessen werden kann. Des weiteren können im Tastkopf (9) Meßkraftgeneratoren vorgesehen sein, über die auf den Taststift (13) in den Koordinatenrichtungen eine Meßkraft aufgeschaltet werden kann

Die Mechanik (3) ist zusätzlich mit hier nicht näher zu sehenden Antrieben versehen, über die die Mechanik in den drei Koordinatenrichtungen verstellt werden kann.

Um einen Meßablauf durchführen zu können, weist das Koordinatenmeßgerät ferner eine Steuer- und Auswerteeinheit (4) auf, die hier rein beispielhaft einen Rechner (26), sowie eine Steuerung (2) umfaßt. Zur Durchführung eines Meßablaufes werden vom Rechner (26) an die Steuerung (2) zur Durchführung des Meßablaufes wichtige Daten übergeben, wie beispielsweise die Sollform des zu vermessenden Werkstückes (5), der Mittelpunkt der Tastkugel des Taststiftes (13) im Maschinenkoordinatensystem oder die einzustellende Meßkraft, mit der der Taststift (13) gegen das Werkstück (5) gedrückt wird. Aus diesen Daten werden sogenannte Antriebssollwerte errechnet entsprechend denen dann die Mechanik (3) so verfahren wird, daß der Taststift (13) kontinuierlich über die Oberfläche des Werkstückes (5) geführt wird, beispielsweise um eine der beiden Bohrungen des Werkstückes (5) oder die obere Fläche des Werkstükkes (5) zu vermessen oder um eine erfindungsgemäße Kalibrierung durchzuführen, wie sie weiter unten im Detail beschrieben wird. Die während des Meßablaufes von den Maßstäben (10,11,12) aufgenommenen Maschinenpositionen ($x_M$,$y_M$,$z_M$) und die im Tastkopf (9) gemessenen Taststiftauslenkungen ($x_T$,$y_T$,$z_T$) werden von der Steuerung (2) an den Rechner (26) weitergegeben. Im Rechner (26) werden dann die Maschinenpositionen ($x_M$,$y_M$,$z_M$) und die Taststiftauslenkungen ($x_T$,$y_T$,$z_T$) verrechnet und hieraus die Meßpunkte ermittelt und ausgewertet.

Bei einer solchen kontinuierlichen Abtastung eines Werkstückes, die man auch als Scanning bezeichnet, treten bei gekrümmter abzutastender Bahn sowie auch bei sich verändernder Abtastgeschwindigkeit Beschleunigungen auf, die infolge der Massenträgheit der bewegten Teile und der nur begrenzten Steifigkeit der Bauelemente des Koordinatenmeßgerätes zu dynamischen Verformungen führen.

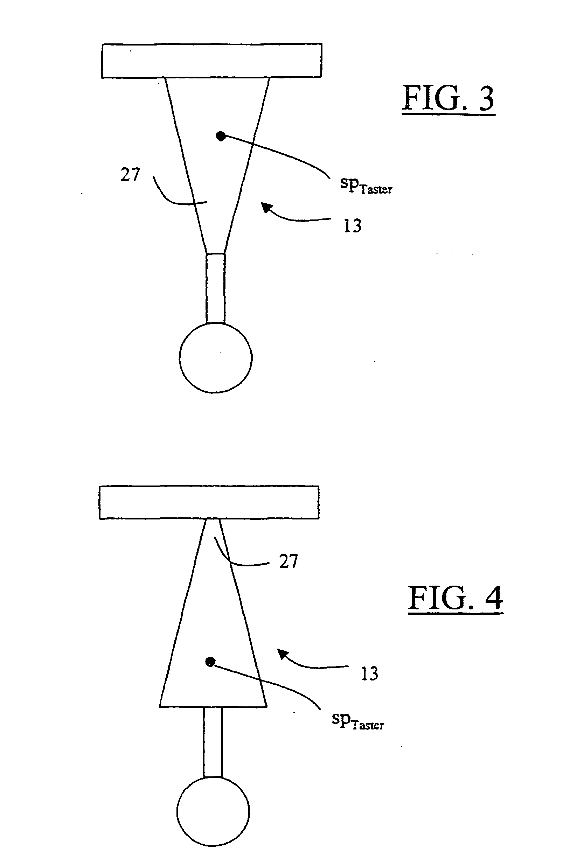

Die drei unterschiedlichen Beschleunigungszustände, die beim Abtasten längs einer beliebigen Bahn auftreten können, werden nunmehr anhand der rein schematischen Darstellung gemäß Figur 2 erläutert.

Zunächst einmal treten am Anfang (c) und am Ende (f) der abzutastenden Bahn (14) Anlauf- und Brems-Beschleunigungen in Richtung der abzufahrenden Bahn (14) auf. In diesem Bereich sind die Antastbedingungen infolge des Regelverhaltens der Maschine durch große Tasterauslenkungen und Regelschwingungen sowie durch die Beschleunigung in Richtung der Bahn gekennzeichnet. Infolge fehlender Kraftaufschaltung in Bahnrichtung bleibt der Tastkopf bei Start und Stop im Beharrungszustand.

Des weiteren treten im Bereich (d) Beschleunigungen tangential zur Werkstückoberfläche auf, da die Bahn auf der ansonsten in diesem Bereich ebenen Werkstückoberfläche gekrümmt ist. Diese Beschleunigungen haben keine Normalkomponente in Bezug auf die Werkstückoberfläche.

Außerdem können auch Beschleunigungen normal zur Werkstückoberfläche auftreten, wenn die Werkstückoberfläche gekrümmt ist, wie dies beispielhaft der Bereich (e) der abzutastenden Bahn (14) zeigt.

Die betreffende Beschleunigung zeigt in den letzten beiden Fällen, d.h. bei gekrümmter Bahn immer in Richtung zum Krümmungsmittelpunkt und liegt in der Schmiegebene. Diese Beschleunigung hat den Betrag

$$\text{Gleichung 1} \quad |\vec{b}| = |\vec{v}|^2 / r$$

Wobei ($\vec{v}$) die Bahngeschwindigkeit und (r) den Krümmungsradius der Bahn bezeichnet. Der Beschleunigungsvektor ($\vec{b}$) ergibt sich als zweite Ableitung der Bahnkoordinaten nach der Zeit

$$\text{Gleichung 2} \qquad \vec{b} = \begin{pmatrix} b_x \\ b_y \\ b_z \end{pmatrix} = \begin{pmatrix} \ddot{x} \\ \ddot{y} \\ \ddot{z} \end{pmatrix}$$

Dieser Beschleunigungsvektor ($\vec{b}$) wird innerhalb der Steuerung numerisch berechnet, kann jedoch prinzipiell auch über Beschleunigungssensoren ermittelt werden.

Es hat sich gezeigt, daß insbesondere auch die Verformung des Taststiftes (13) infolge der eben beschriebenen Beschleunigungen zu einer erheblichen Verfälschung der Meßergebnisse führt. Die bei entsprechenden Beschleunigungen auftretenden Verformungen des Taststiftes (13) hängen neben der Masse des Taststiftes (13) und seiner Steifigkeit auch unter anderem von seiner Masseverteilung ab, wie dies Figuren 3 und 4 verdeutlichen. Die Figuren 3 und 4 zeigen hierbei rein schematisch zwei Taststifte (13), die sowohl dieselbe statische Biegesteifigkeit, wie auch dieselbe Masse aufweisen. Lediglich das kegelstumpfförmige Bauteil (27) ist im Falle von Figur 3 mit seiner Grundfläche nach oben ausgerichtet, während es im Falle der Figur 4 nach unten ausgerichtet ist. Damit befindet sich der Massenschwerpunkt ($sp_{Taster}$) im Falle von Figur 3 höher als im Falle von Figur 4, sodaß sich die beiden Taststifte (13) bei gleichen Beschleunigungen vollkommen unterschiedlich verformen. Dies hat zur Folge, daß für jeden einzelnen Taststift, der bei Messungen auf dem Koordinatenmeßgerät benutzt wird eigene Korrekturdaten vorgesehen werden müssen, über die unter anderem die Verformung des Taststiftes korrigiert wird.

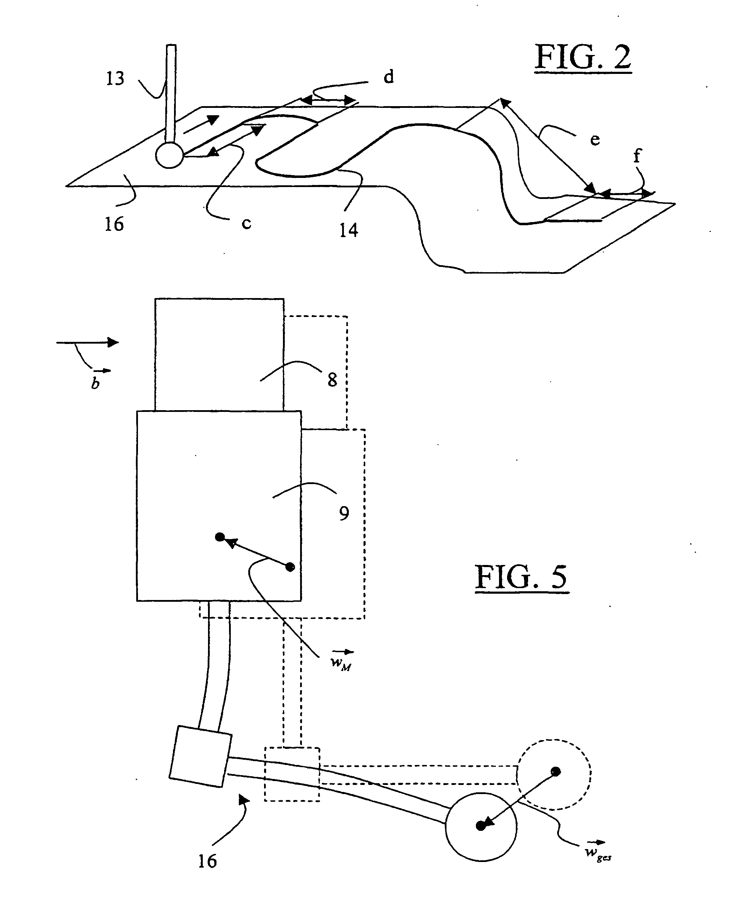

Die sich hierbei bei einer gekrümmten Bahn ergebende Verformung soll nunmehr unter Bezugnahme auf Figur 5 erfolgen, in der ein zur Erläuterung der Verformungsvorgänge etwas allgemeiner Taststift (16) verwendet ist.

Figur 5 zeigt die Verformung des Taststiftes (16), wenn der Tastkopf (9) auf einer gekrümmten Bahn bewegt wird, beispielsweise auf einer horizontal ausgerichteten Kreisbahn. Die Berechnung der Verschiebung ($\vec{w}_{ges}$) der Tastkugel infolge der Beschleunigung ($\vec{b}$) erfolgt unter den nachstehenden Annahmen:

- Die Pinole (8) mit dem Tastkopfgehäuse des Tastkopfes (9) unterliegt infolge von Trägheitskräften einer Parallelverschiebung, während die Neigung der Pinole vernachlässigbar ist; dieser Fehler wird in der Steuerung bereits korrigiert.

- Verformungswirksame Trägheitskräfte entstehen durch die beweglich im Tastkopf aufgehängten Tastkopfmassen, also beispielsweise Federparallelogramme, die den Taststift (16) gegenüber dem Tastkopf (9) beweglich lagern oder eine Taststiftwechselhalterung, die den Taststift (9) auswechselbar an der Tastkopfmechanik aufnimmt, sowie durch die verteilte Masse des Taststiftes (16). Es sei an dieser Stelle ausdrücklich darauf hingewiesen, daß der Begriff Taster in dieser Patentanmeldung immer sowohl den Taststift (16), wie auch die im Tastkopf (9) vorhandenenen mit dem Taststift (16) verbundenen Teile, die beweglich gegenüber dem Tastkopfgehäuse gelagert sind, umfassen.

- Die Verschiebung der beweglichen Teile des Tastkopfes (9) sowie die Verformung des Taststiftes (16) bewirken den dynamischen Verformungsvektor ($\vec{w}_{ges}$), der als dynamische Tasterbiegung interpretiert wird.

Zur analytischen Beschreibung des Verformungsvektors ($\vec{w}_{ges}$) infolge des Beschleunigungsvektors ($\vec{b}$) kann man infolge der überwiegend linear elastischen Verformungsvorgänge einen allgemeinen linearen Ansatz einführen, der eine affine Abbildung zwischen beiden Vektoren ($\vec{w}_{ges}$, $\vec{b}$) vermittelt.

$$\text{Gleichung 3} \qquad \vec{w}_{ges} = D * \vec{b}$$

Wobei (D) die nachfolgende Dynamikmatrix darstellt:

$$\text{Gleichung 4} \qquad \mathbf{D} = \begin{pmatrix} d_{11} & d_{12} & d_{13} \\ d_{21} & d_{22} & d_{23} \\ d_{31} & d_{32} & d_{33} \end{pmatrix}$$

Wie bereits oben ausgeführt, gibt es zwei dominierende Beschleunigungsrichtungen, nämlich eine Beschleunigungsrichtung normal zur Werkstückoberfläche und eine tangential zur Werkstückoberfläche. Es ist deshalb zweckmäßig, die Dynamikmatrix (D) wie folgt in die symmetrische ($D_s$) und die antisymmetrische ($D_a$) Komponente aufzuspalten. Die gesamte Dynamikmatrix (D) ergibt sich als der Summe der Dynamikmatrizen zu $D = D_s + D_a$

$$\text{Gleichung 5} \quad \mathbf{D}_s = \frac{1}{2}\left(\mathbf{D} + \mathbf{D}^T\right) = \begin{pmatrix} d_{11} & d_{s12} & d_{s13} \\ d_{s12} & d_{22} & d_{s23} \\ d_{s13} & d_{s23} & d_{33} \end{pmatrix}$$

$$\text{Gleichung 6} \quad \mathbf{D}_a = \frac{1}{2}\left(\mathbf{D} - \mathbf{D}^T\right) = \begin{pmatrix} 0 & d_{a12} & d_{a13} \\ -d_{a12} & 0 & d_{a23} \\ -d_{a13} & -d_{a23} & 0 \end{pmatrix}$$

Bei der Beurteilung der Auswirkung der dynamischen Verformung ist zu beachten, daß der Verformungsvektor

($\vec{w}_{ges}$) nur mit seiner Normalkomponente ($\vec{w}_n$) wirksam ist, die sich als Skalarprodukt von Verformungsvektor ($\vec{w}_{ges}$) und jeweiliger Flächennormale ($\vec{n}$) ergibt. Ausgehend von den unterschiedenen zwei Beschleunigungszuständen, die bei gekrümmter Bahn auftreten, ergibt sich nun bei genauerer Analyse folgende Zuordnung der beiden Ergänzungsmatrizen ($D_s$) und ($D_a$):

Die symmetrische Ergänzungsmatrix ($D_s$) beschreibt die wirksamen Fehler für den Fall, daß die Beschleunigung ($\vec{b}$) normal zur Werkstückoberfläche wirkt. Das ist beispielsweise der Fall, wenn Zylinder oder Bohrungen gemessen werden.

Die antisymmetrische Ergänzungsmatrix ($D_a$) beschreibt hingegen die dynamischen Fehler für den Fall, daß die Beschleunigung ($\vec{b}$) tangential zur Werkstückoberfläche wirkt. Dies ist beispielsweise der Fall, wenn eine ebene Fläche entlang einer gekrümmten Bahn vermessen wird.

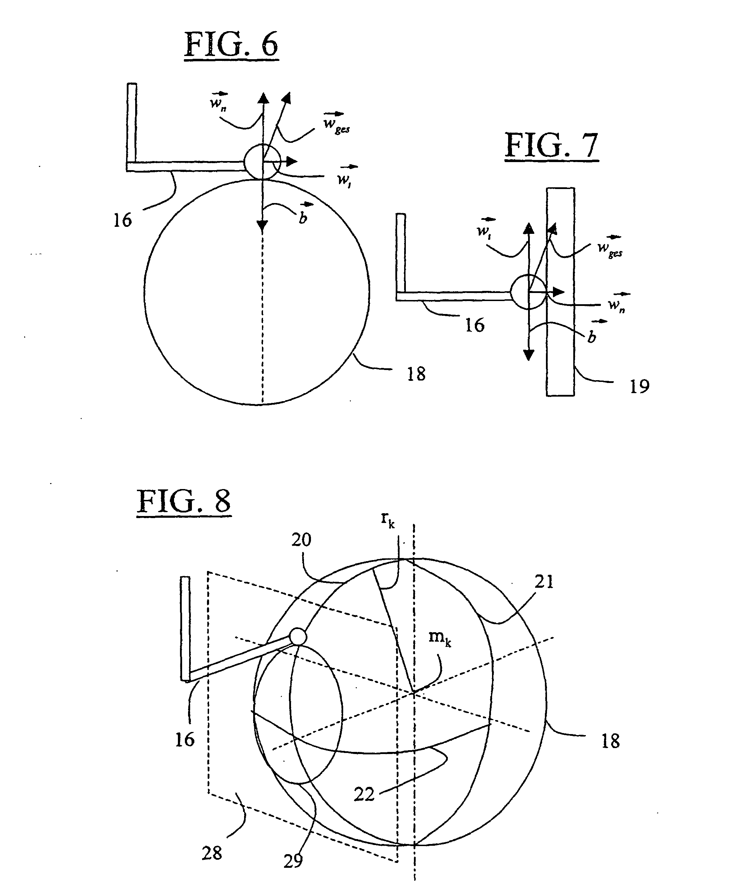

Die Figuren 6 und 7 zeigen die beiden Grenzfälle beim Abtasten längs einer gleichen Kreisbahn. Im Falle der Figur 6 wird die Kreisbahn auf einer Kugel (18) abgetastet. Im Falle der Figur 7 wird dieselbe Kreisbahn entlang einer ebenen Fläche eines Werkstückes (19) abgetastet. In beiden Fällen wirken sich dieselben Verformungskomponenten des gleichen Verformungsvektors ($\vec{w}_{ges}$ unterschiedlich aus. Während die vertikale Verformungskomponente - in Figur 6 mit ($\vec{w}_n$) bezeichnet- im Falle von Figur 6 dazu führt, daß der Taststift (16) in Richtung der Flächennormalen verformt wird, hat dieselbe Verformungskomponente - in Figur 7 mit ($\vec{w}_t$) bezeichnet- im Falle der Figur (7) zur Folge, daß der Taststift (16) tangential zur Werkstückoberfläche des Werkstückes (19) verformt wird. In diesen beiden in Figur 6 und 7 gezeigten Grenzfällen beeinflussen sich die beiden Ergänzungsmatrizen ($D_a$) und ($D_s$) nicht.

Umfangreiche Testmessungen haben ergeben, daß der Hauptanteil der dynamischen Verformung alleine durch eine Dynamikmatrix ($D_M$) beschrieben werden kann, die die Verformung beschreibt, die sich aus der Masse des Taststiftes (16), sowie den Massen der beweglichen Teile des Tastkopfes (9) in den unterschiedlichen Richtungen ergibt.

Die verbleibenden Restabweichungen können dann durch die symmetrische Ergänzungsmatrix ($D_s$) und die antisymmetrische Ergänzungsmatrix ($D_s$) beschrieben werden.

Ausgehend von obigen Erläuterungen ergibt sich für den Verformungsvektor ($\vec{w}_{ges}$) in Abhängigkeit vom Beschleunigungsvektor ($\vec{b}$) deshalb die folgende Gleichung:

$$\text{Gleichung 7} \qquad \vec{w}_{ges} = \{N_T(M_T + m\,E) - A_T + A_M\}\vec{b} = \{D_M + D_s + D_a\}\vec{b} = D\,\vec{b}$$

mit

$N_T$      statische Nachgiebigkeitsmatrix
$M_T$      Massematrix der beweglichen Teile des Tastkopfes
$E$      Einheitsmatrix
$m$      Masse des Taststiftes
$A_T$      Verformungsmatrix, die die Verformung des Taststiftes beschreibt, die sich aus der speziellen Verteilung der Taststiftmasse ergibt
$A_M$      Matrix, die eventuelle Restfehler bei der Korrektur der dynamischen Verformung des Koordinatenmeßgerätes beschreibt
$D_M$      Dynamikmatrix aus der Taststiftmasse und der Masse der beweglichen Teile des Tastkopfes
$D_s$      symmetrische Ergänzungmatrix
$D_a$      antisymmetrische Ergänzungsmatrix

Dieses Ergebnis ist für die Realisierung der Korrektur der dynamischen Fehler des Koordinatenmeßgerätes ganz wesentlich und führt zu folgender Schlußfolgerung:

Die Dynamikmatrix ($D_M$) kann als Näherung ($D_0$) der Dynamikmatrix ($D$) bei Kenntnis der Taststiftmasse ($m$) aus der bekannten Massenmatrix ($M_T$) der beweglichen Teile des Tastkopfes und der statischen Nachgiebigkeitsmatrix ($N_T$) unmittelbar berechnet werden. Diese Matrix beschreibt mit guter Näherung sowohl die symmetrischen als auch die antisymmetrischen Komponenten der Dynamikmatrix ($D$). Eine gesonderte Kalibrierung ist für diese Matrix ($D_0$) nicht erforderlich.

Die symmetrische Ergänzungsmatrix ($D_s$) kann nach der Berechnung Dynamikmatrix ($D_0$) durch eine Kalibrierung an einem rotationssymmetrischen Prüfkörper, wie beispielsweise einer Kugel bestimmt werden, wie dies weiter unten noch beschrieben wird. Die zur Kalibrierung der symmetrischen Ergänzungsmatrix ($D_s$) ermittelten Meßwerte werden bereits unter Verwendung der Dynamikmatrix ($D_0$) korrigiert.

Die antisymmetrische Ergänzungsmatrix ($D_a$) wird dann kalibriert, indem ein Kalibrierkörper mit einer Ebene definierter räumlicher Orientierung abgetastet wird. Die zur Kalibrierung aufgenommenen Meßwerte werden ebenfalls bereits unter Verwendung der Dynamikmatrix ($D_0$) und der symmetrischen Ergänzungsmatrix ($D_s$) korrigiert.

Bestimmung der Dynamikmatrix ($\underline{\mathbf{D}}_M = \underline{\mathbf{D}}_0$)

Wie oben beschrieben berechnet sich die Dynamikmatrix ($D_M$) wie folgt:

$$D_M = N_T (M_T + m\, E).$$

Hierbei repräsentiert ($\mathbf{N}_T$) die statische Nachgiebigkeitsmatrix, die die richtungsabhängige statische Steifigkeit des Taststiftes (16) und der beweglichen Teile des Tastkopfes (9) beschreibt. Diese Nachgibigkeitsmatrix kann beispielsweise durch die Finite Elemente Methode berechnet werden. Alternativ kann die Nachgibigkeitsmatrix über eine entsprechende Kalibrierung bestimmt werden, wie dies beispielsweise in der Veröffentlichung "Multidimensional measuring probe head improves accuracy and functionality of coordinate measuring machines" von Prof. W. Lotze, erschienen im Jahre 1994 in der Zeitschrift "Measurement" Nr. 13 (Elsevier Science) auf den Seiten 91 bis 97 oder im Artikel "High-Speed-Scanning auf Koordinatenmeßgeräten" von Prof. Werner Lotze, erschienen im Jahre 1993 in der Zeitschrift "Microtecnic" Nr. 4, beschrieben wurde.

Der Parameter ($\mathbf{M}_T$) repräsentiert eine Massematrix, die die jeweiligen Massen der beweglichen Teile des Tastkopfes in den drei Koordinatenrichtungen (x,y,z) enthält. Die betreffenden Massen für die betreffenden Richtungen können rechnerisch bestimmt werden, indem die Massen der betreffenden einzelnen Bauteile gemessen werden und dann für jede der drei Koordinatenrichtungen (x,y,z) die Massen der in der betreffenden Richtung beweglichen Bauteile zusammengezählt werden. Alternativ können die Massen beispielsweise auch bestimmt werden, indem der Tastkopf ohne Taststift in eine Richtung beschleunigt wird und entsprechend über die im Tastkopf befindlichen Meßkraftgeneratoren eine Gegenkraft derart erzeugt wird, daß die beweglichen Teile im Tastkopf in ihrer Ruhelage bleiben. Aus der aufgeschalteten Meßkraft und der Beschleunigung kann über die Beziehung F=m*a die Masse des Tastkopfes in der betreffenden Richtung berechnet werden.

Hinter der Bezeichnung (m) verbirgt sich schließlich die Masse des Taststiftes (16), die mit der Einheitsmatrix

$$\left( \mathbf{E} = \begin{pmatrix} 1 & 0 & 0 \\ 0 & 1 & 0 \\ 0 & 0 & 1 \end{pmatrix} \right)$$

multipliziert wird, damit aus dem Skalar Masse (m) ebenfalls eine Matrix wird.

Kalibrierung der symmetrischen Ergänzungsmatrix ($D_s$)

Das gewählte Grundprinzip für die Kalibrierung der symmetrischen Dynamikmatrix ($D_s$) wird anhand von Figur 8 erläutert. Wird eine Kugel (18), wie sie beispielhaft in Figur 8 gezeigt ist, statisch oder quasistatisch gemessen, das heißt, daß die zum abtasten der Kugel (18) verwendete Meßgeschwindigkeit ($v_1$) sehr gering ist, dann liegen sämtliche Meßpunkte auf der idealen Kugel. Eine Messung bei höherer Geschwindigkeit ($v_s$) ergibt hingegen Meßpunkte, denen die dynamische Verformung überlagert ist, so daß die Kugel dann als Ellipsoid erscheint. Diese Abweichung muß nun an unterschiedlichen Stellen der Kugel (18) als Funktion der Beschleunigung ($\bar{b}$) bestimmt werden und daraus die gesuchte Ergänzungsmatrix ($D_s$) berechnet werden.

Damit die Rechnung numerisch stabil wird, muß die Kugel (18) auf der dem Taststift (16) zugänglichen Seite in einem hinreichend dichten Netz gemessen werden. Als hinreichend hat sich die Messung entlang dreier sich etwa senkrecht schneidender Großkreise (20,21,22) erwiesen, wobei ein Großkreis (21) vollständig und die anderen zwei Großkreise (20,22) jeweils mindestens über 180° zu messen sind. Die drei Großkreise (20,21,22) werden jeweils mit zwei unterschiedlichen Meßgeschwindigkeiten ($v_1$, $v_s$) gemessen.

Für die Bestimmung der Koeffizienten der symmetrischen Dynamikmatrix ($D_s$) wird wie folgt vorgegangen:

Aus den quasistatischen Messungen mit einer sehr geringen Meßgeschwindigkeit ($v_1$) wird der Mittelpunkt ($\bar{m}_k$) und Radius ($r_k$) der Ausgleichskugel bestimmt. Danach wird die Kugel (18) entlang derselben Bahn mit einer hohen Meßgeschwindigkeit ($v_s$) vermessen, wobei aus den Abweichungen der gemessenen Meßwerte gegenüber der bestimmten Ausgleichskugel die gesuchten sechs Koeffizienten nach der Methode der kleinsten Fehlerquadrate berechnet werden.

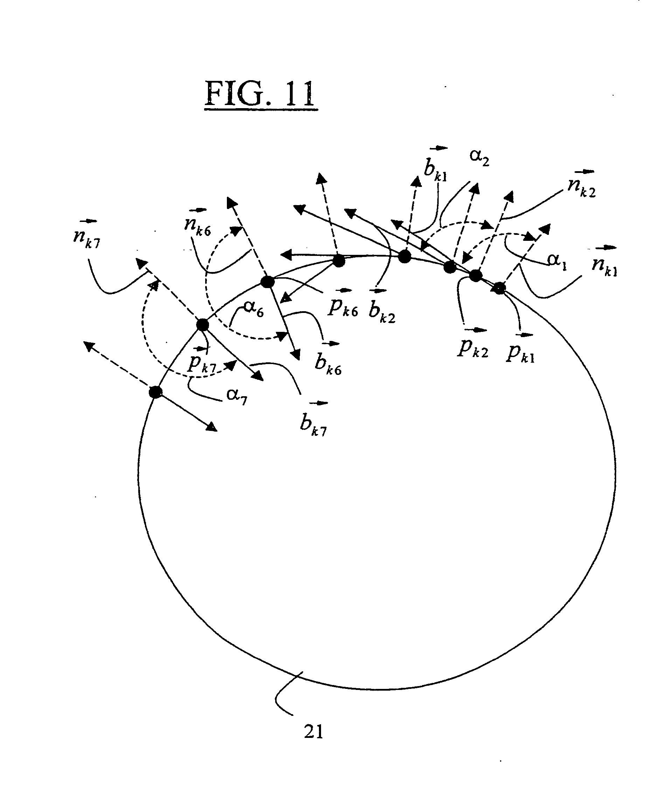

Bevor die bei der hohen Meßgeschwindigkeit ($v_s$) aufgenommenen Meßpunkte ($p_{ki}$) ausgewertet werden, sollte eine Datenvalidierung vorgenommen werden, die die Meßpunkte als gültig oder als ungültig validiert. Um das Prinzip dieser Datenvalidierung zu erläutern wird auf Figur 11 bezug genommen. Hierin sind die nacheinander auf dem Kreis aufgenommenen Meßpunkte ($\vec{p}_{k1}, \vec{p}_{k2}$) u.s.w.) gezeigt. Außerdem ist für jeden Meßpunkt auch die jeweilige Flächennormale ($\vec{n}_{k1}, \vec{n}_{k2}$) u.s.w.), wie auch die durch die Mechanik (3) des Koordinatenmeßgerätes aufgeschaltete Beschleunigung ($\vec{b}_{k1}, \vec{b}_{k2}$) u.s.w.) eingezeichnet. Der Tastkopf (9) ist hierbei beim ersten Meßpunkt ($\vec{p}_{k1}$) in Ruhe und wird dann in seine hohe Meßgeschwindigkeit ($v_s$) beschleunigt. Wie aus den ersten Meßpunkten ($\vec{p}_{k1}, \vec{p}_{k2}$) zu sehen ist, sind die betreffenden Beschleunigungvektoren ($\vec{b}_{k1}, \vec{b}_{k2}$ etc.) der ersten Meßpunkte ($\vec{p}_{k1}, \vec{p}_{k2}$) im wesentlichen tangential zum Kreis ausgerichtet, weil hier im wesentlichen nur die Anfahrbeschleunigung wirkt. Nachdem der Tastkopf (9) dann nach und nach seine hohe Meßgeschwindigkeit ($v_s$) erreicht, drehen die Beschleunigungsvektoren immer mehr in radialer Richtung, weil einerseits der Anteil der tangentialen Anfahrbeschleunigung immer geringer wird und sich auf der anderen Seite die radiale Baschleunigung aufgund der gekrümmten Bahn immer mehr erhöht. In den Meßpunkten ($\vec{p}_{k6}, \vec{p}_{k7}$) hat der Tastkopf (9) dann die hohe Meßgeschwindigkeit ($v_s$) erreicht, so daß die Beschleunigungsvektoren ($\vec{b}_{k6}, \vec{b}_{k7}$ etc.) nunmehr parallel zu den Normalenvektoren ($\vec{n}_{k6}, \vec{n}_{k7}$) u.s.w.) stehen. Erst jetzt wirkt die Beschleunigung aufgrund der gekrümmten Bahn in normaler Richtung, so daß erst jetzt die aufgenommenen Meßpunkte sinnvoll zur Kalibrierung verwendet werden können.

Um die Meßpunkte als gültig oder ungültig zu validieren wird deshalb der Winkel ($\alpha_i$) zwischen den jeweiligen Normalenvektoren und den Beschleunigungsvektoren ausgewertet. Wie bei den ersten beiden Meßpunkten ($\vec{b}_{k1}, \vec{b}_{k2}$) zu sehen betragen die betreffenden Winkel ($\alpha_1, \alpha_2$) hier etwa 90°. Im Falle der Meßpunkte ($\vec{p}_{k6}, \vec{p}_{k7}$) betragen die Winkel ($\alpha_6, \alpha_7$) etwa 180°. Die Überprüfung kann hierbei beispielsweise derart erfolgen, daß nur Meßpunkte als gültig validiert werden, bei denen der betreffende Winkel ($|\alpha_i| \geq 150°$).

Die eben beschriebene Datenvalidierung kann natürlich völlig analog auch mit den gemessenen Meßwerten bezüglich der auf das Werkstück aufgeschalteten Meßkraft durchgeführt werden. Hier ist der Winkel zwischen dem Meßkraftvektor und dem betreffenden Normalenvektor zu bilden.

Die beschriebene Datenvalidierung sollte sowohl bei der Kalibrierung der Dynamiktensoren verwendet werden, wie auch im späteren Meßablauf.

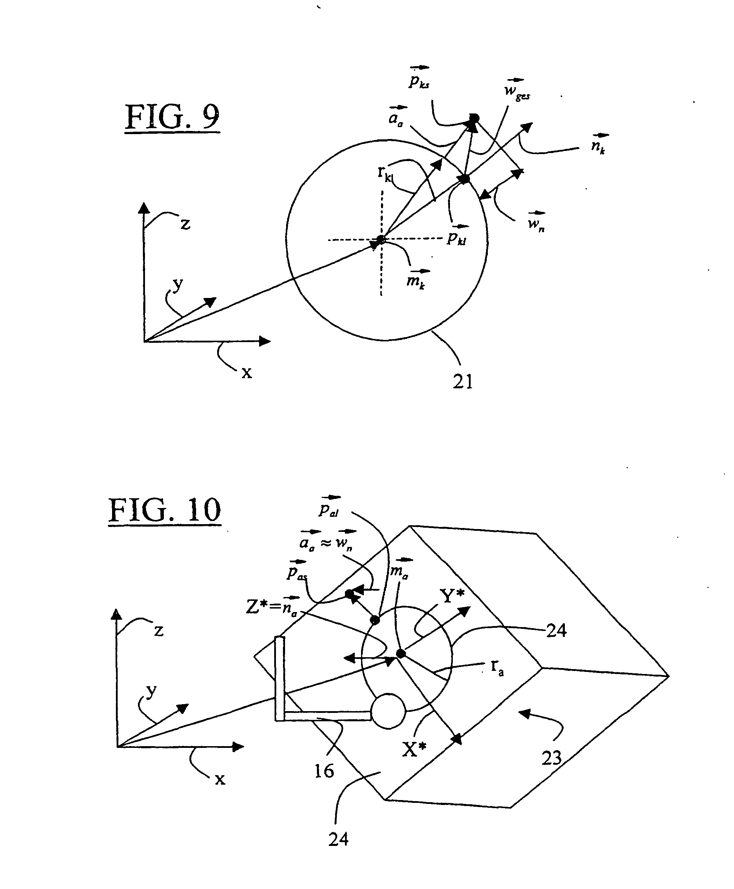

Wie nunmehr aus den bei der hohen Geschwindigkeit gemessenen Meßpunkten die Parameter der symmetrischen Ergänzungsmatrix ($D_s$) ermittelt werden, soll anhand von Figur 9 erläutert werden. Für den senkrechten Abstand ($a_a$) eines bei hoher Abtastgeschwindigkeit ($v_s$) gemessenen Meßpunktes ($\vec{p}_{ks} = (x_p, y_p, z_p)^T$) zur bestimmten Ausgleichskugel mit dem Mittelpunkt ($\vec{m}_k = (x_k, y_k, z_k)^T$) und dem Radius ($r_k$) gilt

$$\text{Gleichung 8 a} \qquad a = |\vec{p}_{ks} - \vec{m}_k| - r_k$$

Aus der Modellgleichung Gleichung 7 folgt andererseits für den senkrechten Abstand ($a_a \approx w_n$) eines Meßpunktes ($\vec{p}_{ks}$) in Richtung des Normalenvektors ($\vec{n}$) auch:

$$\text{Gleichung 9} \qquad w_n = \vec{n}^T \vec{w}_{ges} = \vec{n}^T D_s \vec{b}$$

Die unbekannten Koeffizienten ($d_{sij}$) der Matrix ($D_s$) in Gleichung *9* werden durch Optimierung nach der Methode der kleinsten Quadrate bestimmt.

$$\text{Gleichung 10} \quad Q = \sum_{i=1}^{n} \left( a_{ai} - w_{ni} \right)^2 \Rightarrow \text{Min}$$

Die Lösung für den Parametervektor (d), der die Parameter der symmetrischen Ergänzungsmatrix enthält

$$\text{Gleichung 11} \qquad \vec{d} = (d_{11} \; d_{s12} \; d_{s13} \; d_{22} \; d_{s23} \; d_{33})$$

erhält man aus dem folgenden Normalgleichungssystem

$$\text{Gleichung 12} \quad \sum_{i=1}^{n}\left(\mathbf{J}_i^T \; \mathbf{J}_i\right)\vec{d} = \sum_{i=1}^{n}\mathbf{J}_i^T \; \mathbf{a}_{ai}$$

mit der Jacobimatrix (**J**) sowie dem Beschleunigungsvektor ($\vec{b}$) und dem Normalenvektor ($\vec{n}$) für jeden einzelenen Meßpunkt i=1 .. n:

$$\text{Gleichung 13} \qquad J = (b_x \, n_x \; b_y \, n_x + b_x \, n_y \; b_z \, n_x + b_x \, n_z \; b_y \, n_y \; b_z \, n_y + b_y \, nz \; b_z \, n_z)$$

$$\text{Gleichung 14} \qquad \vec{b} = (b_x \; b_y \; b_z)^T \qquad \vec{n} = (n_x \; n_y \; n_z)^T$$

Wegen der Linearität der Gleichung 10 ist die direkte Berechnung des Parametervektors ($\vec{d}$) in einem Schritt möglich.

Kalibrierung der antisymmetrischen Dynamikmatrix ($D_a$)

Die Berechnung der drei Koeffizienten der antisymmetrischen Matrix ($D_a$) verläuft - ausgehend von dem theoretischen Modell - im wesentlichen nach dem gleichen Schema mit einem Kalibrierwürfel (23) mit ebenen Kalibrierflächen, die parallel zu den Koordinatenebenen, das heißt also zur x-y-Ebene, zur x-z-Ebene und zur y-z-Ebene ausgerichtet sind. Die Auswertung umfangreicher Testmessungen hat hierbei ergeben, daß die vollständige dynamische Korrektur für die Messung von ebenen Flächen in beliebiger räumlicher Orientierung nicht möglich ist. Sie ist aber andererseits in dieser Allgemeinheit auch nicht notwendig, da für die Messung ebener Werkstückflächen jeweils ein Taster bestimmter Konfiguration eingesetzt wird. Die Korrektur und folglich auch die dynamische Kalibrierung ist dann für die aktuelle räumliche Orientierung ausreichend. Diese Einschränkung ist gleichbedeutend mit der Kalibrierung von nur zwei antisymmetrischen Koeffizienten von ($D_a$) an einer ebenen Fläche mit der jeweiligen räumlichen Orientierung.

Die Meßanordnung sowie den Modellansatz für die Kalibrierung zeigt Figur 10. Hierbei wird zunächst die Ebene (25) eines Würfels (23) längs einer Kreisbahn (24) quasistatisch gemessen, d.h. mit einer sehr geringen Meßgeschwindigkeit ($v_1$). Der Durchmesser der Kreisbahn (24) entspricht hierbei in etwa dem Durchmesser der Kalibrierkugel (18). Aus den Meßwerten wird ein Ausgleichskreis mit dem Mittelpunkt ($\vec{m}_a$) und Radius ($r_a$) und einer Flächennormalen ($\vec{n}_a$) bestimmt. Danach wird die Kreisbahn bei einer hohen Meßgeschwindigkeit ($v_s$) abgetastet. Ein gemessener Meßpunkt ($\vec{p}_{as}$) hat dann von der Ebene den Abstand ($a_a$) nach folgender Gleichung.

$$\text{Gleichung 15} \qquad a_a = \vec{n}^{T} \, ( \vec{p}_{as} - \vec{m}_a)$$

Zur Berechnung der Matrix ($D_a$) führt man zweckmäßig ein lokales Koordinatensystem mit den Koordinatenrichtungen (x*,y*,z*) mit der Flächennormale ($\bar{n}_a$) als Achse (z*) ein. Zwischen den Koordinatensystemen (x,y,z) und (x*,y*,z*) gilt die folgende Transformationsgleichung mit der Transformationsmatrix (T), die aus dem Normalenvektor ($\vec{n}_a$) zu bestimmen ist.

$$\text{Gleichung 16} \qquad \vec{p}_{as}{}^* = T(\vec{p}_{as} - \vec{m}_a)$$

Für den Abstand ($a_a = w_n$) eines Meßpunktes ($\vec{p}_a$) in Normalenrichtung gilt dann gleichermaßen in beiden Koordinatensystemen

$$\text{Gleichung 17} \qquad w_n = \vec{n}^{T} \, D_a \, \vec{b} = \vec{n}^{*T} \, D^*{}_a \, \vec{b}^*$$

woraus auch die Transformationsbeziehung für die Dynamikmatrix folgt

$$\text{Gleichung 18} \qquad D_a = T^T \, D^*{}_a \, T$$

Der Abstand ($a_a$) ist, wie oben bereits ausgeführt, die z-Komponente des Verschiebungsvektors ($\vec{w}_{ges}$), so daß Gleichung 17 auf den folgenden Ausdruck reduziert werden kann.

$$\text{Gleichung 19} \quad w_n = \begin{pmatrix} -\dot{d}_{a13} & -\dot{d}_{a23} & 0 \end{pmatrix} \begin{pmatrix} b_x \\ b_y \\ b_z \end{pmatrix}$$

Das Normalgleichungssystem für die beiden Koeffizienten folgt dann zu

$$\text{Gleichung 20} \quad \sum_{i=1}^{n} \begin{pmatrix} \dot{b}_x \\ \dot{b}_y \end{pmatrix} \begin{pmatrix} \dot{b}_x & \dot{b}_x \end{pmatrix} \begin{pmatrix} \dot{d}_{13} \\ \dot{d}_{23} \end{pmatrix} = \sum_{i=1}^{n} \begin{pmatrix} \dot{b}_x \\ \dot{b}_y \end{pmatrix} \bar{a}_{ai}$$

und ergibt unmittelbar die gesuchte antisymmetrische Dynamikmatrix **$D_a$**.

$$\text{Gleichung 21} \quad D_a^{\bullet} = \begin{pmatrix} 0 & 0 & \dot{d}_{a13} \\ 0 & 0 & \dot{d}_{a23} \\ -\dot{d}_{a13} & -\dot{d}_{a23} & 0 \end{pmatrix}$$

Die erhaltene antisymmetrische Dynamikmatrix ($D^*{}_a$) ist anschließend mit der Gleichung 18 in das Meßkoordinatensystem (x,y,z) zu transformieren. Die resultierende Dynamikmatrix (D) ergibt sich dann durch Addition der drei Anteile ($D_0$, $D_s$ und $D_a$) nach Gleichung 7.

Wenn eine vollständige Korrektur aller dynamischen Verformungen korrigiert werden soll, muß die Tasterkalibrierung der Reihenfolge nach in den folgenden drei Stufen für die statische und dynamische Kalibrierung des statischen Biegetensors (N) und des Dynamiktensors (D) durchgeführt werden:

- Statische Tasterkalibrierung an der Kalibrierkugel (Tasterdurchmesser, Tasteroffset, Biegetensor) sowie Berechnung der Näherung **$D_0$** des Dynamiktensors. Aktueller Dynamiktensor ist nach erfolgreicher Kalibrierung **D = $D_0$**.

- Ermitteln der symmetrischen Ergänzungsmatrix ($D_s$) Dynamiktensors für die Korrektur von dynamischen Fehlern bei der Messung von Bohrungen, Wellen, Kugeln u. ä. Der aktuelle Dynamiktensor (D) ist nach erfolgreicher Kalibrierung D = $D_0$ + $D_s$

- Ermitteln der antisymmetrischen Ergänzungsmatrix ($D_a$) des Dynamiktensors für die Korrektur von dynamischen Fehlern bei der Messung von Ebenen mit etwa gleicher Raumorientierung, stumpfen Kegeln usw.. Der aktuelle Dynamiktensor (D) ist nach erfolgreicher Kalibrierung **D = $D_0$ + $D_s$ + $D_a$**.

Die einzelnen Kalibrierschritte müssen in dieser Reihenfolge durchgeführt werden und nach jedem Schritt muß die zuletzt bestimmte Ergänzungsmatrix (Ds, Da) zum bisher bestimmten Dynamiktensor (D) dazusummiert werden.

Die Kalibrierung kann aber auch nach der ersten oder zweiten Stufe abgebrochen werden, wobei dann Restfehler bestehen bleiben. Für den Anwender besteht damit die Möglichkeit, in Abhängigkeit von der Meßaufgabe die Tasterkalibrierung auszuwählen. Bei einer Meßaufgabe beispielsweise, bei der nahezu keine tangentiale Abweichung zu erwarten ist, z.B. beim Messen einer Bohrung, kann auf die antisymmetrische Drehmatrix ($D_a$) verzichtet werden.

Natürlich kann selektiv auch nur eine beliebige Dynamikmatrix verwendet werden. Beispielsweise könnte nur die symmetrische Ergänzungsmatrix ($D_s$) kalibriert werden. Nachteilig hieran ist jedoch, daß sich insbesondere in Abhängigkeit von der jeweiligen Meßaufgabe größere Meßfehler ergeben können.

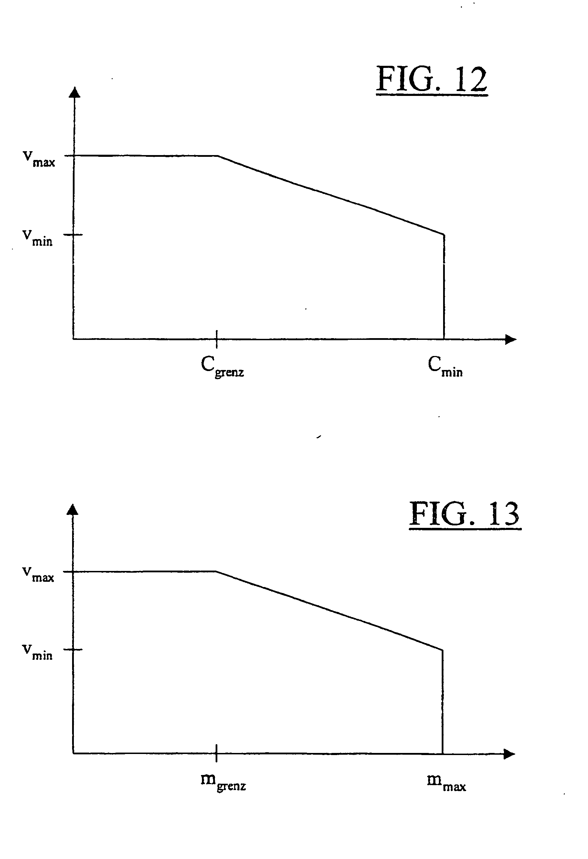

Des weiteren sollte im Koordinatenmeßgerät die zulässige Meßgeschwindigkeit in Abhängigkeit von der dynamischen Steifigkeit, die im kalibrierten Dynamiktensor hinterlegt ist verändert werden. Wie aus Figur 12 zu sehen ist, kann die maximal zulässige Meßgeschwindigkeit ($v_{max}$) bis zu einer dynamischen Steifigkeit (Cgrenz) zugelassen werden. Danach wird die zulässige Meßgeschwindigkeit bei kleiner werdender Steifigkeit in einem Übergangsbereich bis auf ($v_{min}$) reduziert. Bei Steifigkeiten kleiner als (Cmin) wird entweder der Meßablauf gar nicht mehr ausgeführt oder aber an den Anwender eine entsprechende Meldung ausgegeben.

Des weiteren sollte außerdem in Abhängigkeit von der Masse des Taststiftes (13 bzw. 16) die Meßgeschwindigkeit verändert werden. Wie aus Figur 13 zu sehen ist, kann die maximal zulässige Meßgeschwindigkeit ($v_{max}$) bis zu einer Taststiftmasse ($m_{grenz}$) zugelassen werden. Danach wird die zulässige Meßgeschwindigkeit bei größer werdender Taststiftmasse in einem Übergangsbereich bis auf ($v_{min}$) reduziert. Bei Taststiftmassen größer als ($m_{max}$) wird entweder der Meßablauf gar nicht mehr ausgeführt oder aber an den Anwender eine entsprechende Meldung ausgegeben.

Die Reduzierung der zulässigen Meßgeschwindigkeiten erfolgt sowohl in Abhängigkeit von der Steifigkeit, wie auch in Abhängigkeit von der Taststiftmasse. Wird also die zulässige Meßgeschwindigkeit reduziert, weil die Steifigkeit den Wert (Cgrenz) unterschreitet, so wird diese bereits reduzierte Meßgeschwindigkeit nochmals weiter reduziert, wenn zusätzlich auch die Taststiftmasse den Wert ($m_{grenz}$) überschreitet.

**Patentansprüche**

1. Verfahren zur Korrektur der Meßergebnisse eines Koordinatenmeßgerätes, bei dem ein Werkstück kontinuierlich abgetastet wird, mit folgenden Verfahrensschritten:

   - Bestimmung des dynamischen Biegeverhaltens des Tasters als ein- oder mehrdimensionales Parameterfeld, insbesondere als Dynamiktensor (D),
   - Berechnung von Korrekturwerten aus dem Parameterfeld (D) unter Berücksichtigung der Beschleunigung des Tasters ($\bar{b}$)
   - Korrektur der Meßergebnisse mit den Korrekturwerten

   **dadurch gekennzeichnet, daß**
   das Parameterfeld das Produkt des statischen Biegetensors ($N_T$) des Tasters mit dem Massentensor ($M_T + mE$) des Tasters umfaßt.

2. Verfahren nach Anspruch 1, **dadurch gekennzeichnet, daß** das Parameterfeld zusätzlich die Abweichungen bei Beschleunigung des Tasters normal zur Werkstückoberfläche beschreibt.

3. Verfahren nach Anspruch 1 oder 2, **dadurch gekennzeichnet, daß** das Parameterfeld durch Rechnung und/oder durch dynamische Kalibrierung bestimmt wird.

4. Verfahren nach einem der Ansprüche 1-3, **dadurch gekennzeichnet, daß** das Parameterfeld aus mehreren Teilfeldern ($D_M, D_s, D_a$) besteht und wobei zur Korrektur wenigstens eines der Teilfelder kalibriert wird.

5. Verfahren nach einem der Ansprüche 1 bis 4, bei dem das Parameterfeld ($D_s$) die Abweichungen bei Beschleunigung des Tasters normal zur Werkstückoberfläche beschreibt **dadurch gekennzeichnet, daß** die Parameter des Parameterfeldes durch kontinuierliche Abtastung eines rotationssymmetrischen Kalibrierkörpers (18) mit unterschiedlichen Geschwindigkeiten ($v_1, v_s$)bestimmt werden.

6. Verfahren nach Anspruch 5, **dadurch gekennzeichnet, daß** der rotationssymmetrische Kalibrierkörper eine Kalibrierkugel (18) ist und daß zur Bestimmung der Paramter des Parameterfeldes wenigstens drei Großkreise (20,21,22) mit unterschiedlichen Geschwindigkeiten abgetastet werden.

7. Verfahren nach einem der Ansprüche 1 bis 6, **dadurch gekennzeichnet, daß** das Parameterfeld ($D_a$) zusätzlich die Abweichungen bei tangentialer Beschleunigung des Tasters gegenüber der Werkstückoberfläche beschreibt, wobei die Parameter des Parameterfeldes bestimmt werden, indem eine gekrümmte Bahn auf einer Kalibrierebene (25,28) abgetastet wird, die parallel zu den zu vermessenden Werkstückflächen ausgerichtet ist, und wobei die Abtastung nach wenigstens einem der nachfolgenden Prinzipien erfolgt:

- ein und dieselbe gekrümmte Bahn wird mit unterschiedlichen Geschwindigkeiten abgetastet oder
- die Bahn wird mit einer festen Geschwindigkeit abgetastet, wobei die Bahn unterschiedliche Krümmungen aufweist.

8. Verfahren nach Anspruch 7, **dadurch gekennzeichnet, daß** die Parameter des Parameterfeldes durch Messung eines Kleinkreises (29) an einer Kalibrierkugel mit unterschiedlicher Geschwindigkeit in mindestens einer Kalibrierebene bestimmt werden.

9. Verfahren nach einem der Ansprüche 1 bis 8, **dadurch gekennzeichnet, daß** Meßpunkte, die beim Kalibrieren aufgenommen werden oder im späteren Meßbetrieb aufgenommen werden in Abhängigkeit von der gemessenen Beschleunigung und/oder der gemessenen Meßkraft als gültig oder ungültig validiert werden.

10. Verfahren nach Anspruch 9, **dadurch gekennzeichnet, daß** zur Validierung ein Winkel ($\alpha_i$) zwischen Beschleunigungsvektor ($\vec{b}_{ki}$) oder Meßkraftvektor und dem Normalenvektor ($\vec{n}_{ki}$) der Werkstückoberfläche im Meßpunkt ($p_{ki}$) errechnet wird und ein Meßpunkt als gültig validiert wird, wenn der Winkel einen vordefinierten Wert unterschreitet oder überschreitet.

11. Verfahren nach einem der Ansprüche 1 bis 10, **dadurch gekennzeichnet, daß** die maximal zulässige Meßgeschwindigkeit unter Berücksichtigung der dynamischen Steifigkeit des Tasters und der Tastermasse ermittelt wird.

12. Koordinatenmeßgerät umfassend

- eine in den drei Koordinatenrichtungen verschiebliche Meßmechanik (3) mit einem hieran befestigten Tastkopf (9) mit einem Taster (13), von dem die Oberfläche eines zu vermessenden Werkstückes (5) kontinuierlich abgetastet wird, wobei die Meßmechanik entsprechende Meßwerte liefert

- eine Auswerteeinheit, in der die Meßergebnisse ausgewertet und korrigiert werden, wobei die Auswerteeinheit folgende Operationen durchführt:

- Bestimmung des dynamischen Biegeverhaltens des Tasters als ein- oder mehrdimensionales Parameterfeld, insbesondere als Dynamiktensor (D),
- Berechnung von Korrekturwerten aus dem Parameterfeld (D) unter Berücksichtigung der Beschleunigung des Tasters ($\bar{b}$)
- Korrektur der Meßergebnisse mit den Korrekturwerten

**dadurch gekennzeichnet, daß**
das Paramterfeld das Produkt des statischen Biegetensors ($N_T$) des Tasters mit dem Massentensor ($M_T + mE$) des Tasters umfaßt.

13. Koordinatenmeßgerät nach Anspruch 12, **dadurch gekennzeichnet, daß** die Auswerteeinheit zur Durchführung der in den Ansprüchen 1 bis 11 genannten Verfahren geeignet ist.

**Claims**

1. Method for the correction of measurement results of a coordinate measuring machine, in which a workpiece is continuously scanned, and which has the following method steps:

- determining dynamic bending behaviour of the probe as a one- or multidimensional parameter field, in particular as a dynamic tensor (D),
- calculating correction values from the parameter field (D) while taking account of the acceleration of the probe ($\bar{b}$), and
- correcting the measurement results with the aid of the correction values,

**characterized in that** the parameter field comprises the product of the static bending tensor ($N_T$) of the probe and the mass tensor ($M_T + mE$) of the probe.

**2.** Method according to Claim 1, **characterized in that** the parameter field additionally describes the deviations during acceleration of the probe normal to the workpiece surface.

**3.** Method according to Claim 1 or 2, **characterized in that** the parameter field is determined by calculation and/or by dynamic calibration.

**4.** Method according to one of Claims 1 - 3, **characterized in that** the parameter field consists of a number of subfields $(D_M, D_s, D_a)$, at least one of the subfields being calibrated for the correction.

**5.** Method according to one of Claims 1 to 4, in which the parameter field $(D_s)$ describes the deviations during acceleration of the probe normal to the workpiece surface, **characterized in that** the parameters of the parameter field are determined by continuous scanning of a rotationally symmetrical calibration body (18) at different scanning speeds $(v_1, v_s)$.

**6.** Method according to Claim 5, **characterized in that** the rotationally symmetrical calibration body is a calibration sphere (18), and **in that** at least three great circles (20, 21, 22) are scanned at different speeds in order to determine the parameters of the parameter field.

**7.** Method according to one of Claims 1 to 6, **characterized in that** the parameter field $(D_a)$ additionally describes the deviations during tangential acceleration of the probe with respect to the workpiece surface, the parameters of the parameter field being determined by scanning a curved track on a calibration plane (25, 28) which is aligned parallel to the workpiece surfaces to be measured, and the scanning being performed according to at least one of the following principles:

- one and the same curved track is scanned at different speeds,
- the track is scanned at a fixed speed, the track having different curvatures.

**8.** Method according to Claim 7, **characterized in that** the parameters of the parameter field are determined by measuring a small circle (29) on a calibration sphere at different speeds in at least one calibration plane.

**9.** Method according to one of Claims 1 to 8, **characterized in that** measuring points which are recorded during calibration or recorded in the later measuring mode are validated as valid or invalid as a function of the measured acceleration and/or the measured measuring force.

**10.** Method according to Claim 9, **characterized in that** for the validation an angle $(\alpha_i)$ between the acceleration vector $(\bar{b}_{ki})$ or measuring force vector and the normal vector $(\bar{n}_{ki})$ of the workpiece surface is calculated at the measuring point $(p_{ki})$, and a measuring point is validated as valid when the angle undershoots or overshoots a predefined value.

**11.** Method according to one of Claims 1 to 10, **characterized in that** the maximum permissible measuring speed is determined by taking account of the dynamic stiffness of the probe and the probe mass.

**12.** Coordinate measuring machine comprising

- a measuring mechanism (3) which can be displaced in three coordinate directions and has fastened thereon a probe head (9) having a probe (13) by which the surface of a workpiece (5) to be measured is continuously scanned, the measuring mechanism supplying corresponding measured values, and
- an evaluation unit in which the measurement results are evaluated and corrected, the evaluation unit carrying out the following operations:

- determining dynamic bending behaviour of the probe as a one- or multidimensional parameter field, in particular as a dynamic tensor (D),
- calculating correction values from the parameter field (D) while taking account of the acceleration of the probe $(\bar{b})$, and
- correcting the measurement results with the aid of the correction values,

**characterized in that** the parameter field comprises the product of the static bending tensor ($N_T$) of the probe and the mass tensor ($M_T$ + mE) of the probe.

13. Coordinate measuring machine according to Claim 12, **characterized in that** the evaluation unit is suitable for carrying out the methods named in Claims 1 to 11.


**Revendications**

1. Procédé pour corriger des résultats de mesure d'un appareil de mesure de coordonnées, dans lequel une pièce d'oeuvre est palpée en continu, avec les étapes de procédé suivantes :

   - détermination du comportement dynamique en flexion du palpeur sous la forme d'un champ de paramètres unidimensionnels ou multidimensionnels, en particulier sous la forme d'un tenseur dynamique (D),
   - calcul des valeurs de correction à partir du champ de paramètres (D) en tenant compte de l'accélération du palpeur ($\bar{b}$)
   - correction des résultats de mesure avec les valeurs de correction

   **caractérisé en ce que**,
   le champ de paramètres comprend le produit du tenseur de flexion statique ($N_T$) du palpeur par le tenseur de masse ($M_T + mE$) du palpeur.

2. Procédé selon la revendication 1, **caractérisé en ce que** le champ de paramètres décrit en outre les écarts lors de l'accélération du palpeur normale à la surface de la pièce d'oeuvre.

3. Procédé selon la revendication 1 ou 2, **caractérisé en ce que** le champ de paramètres est déterminé par un calcul et/ou par un étalonnage dynamique.

4. Procédé selon l'une quelconque des revendications 1 à 3 **caractérisé en ce que** le champ de paramètres est constitué de plusieurs champs partiels ($D_M$, $D_s$, $D_a$) et au moins l'un des champs partiels étant étalonné pour la correction.

5. Procédé selon l'une quelconque des revendications 1 à 4, dans lequel le champ de paramètres ($D_s$) décrit les écarts lors de l'accélération du palpeur normale à la surface de pièce d'oeuvre, **caractérisé en ce que** les paramètres du champ de paramètres sont déterminés par un palpage continu d'un corps d'étalonnage (18) à symétrie de révolution, avec des vitesses différentes ($v_1$, $v_s$).

6. Procédé selon la revendication 5, **caractérisé en ce que** le corps d'étalonnage à symétrie de révolution est une sphère d'étalonnage (18) et **en ce que** pour déterminer les paramètres du champ de paramètres, au moins trois grands cercles (20, 21, 22) sont palpés, avec différentes vitesses.

7. Procédé selon l'une quelconque des revendications 1 à 6, **caractérisé en ce que** le champ de paramètres ($D_a$) décrit en outre les écarts lors d'une accélération tangentielle du palpeur par rapport à la surface de pièce d'oeuvre, les paramètres du champ de paramètres étant déterminés en palpant une trajectoire courbée sur un plan d'étalonnage (25, 28), qui est orienté parallèlement aux surfaces de pièce d'oeuvre à mesurer, et le palpage se réalise selon au moins l'un des principes suivants :

   - une seule et même trajectoire courbée est palpée avec des vitesses différentes ou
   - la trajectoire est palpée avec une vitesse fixe, la trajectoire présentant différentes courbures.

8. Procédé selon la revendication 7, **caractérisé en ce que** les paramètres du champ de paramètres sont déterminés par une mesure d'un petit cercle (29) sur une sphère d'étalonnage avec une vitesse différente dans au moins un plan d'étalonnage.

9. Procédé selon l'une quelconque des revendications 1 à 8, **caractérisé en ce que** les points de mesure qui sont enregistrés lors de l'étalonnage ou enregistrés dans une opération de mesure ultérieure en fonction de l'accélération mesurée et/ou de la force de mesure mesurée, sont validés comme étant valables ou non valables.

**10.** Procédé selon la revendication 9, **caractérisé en ce que**, pour la validation, un angle ($\alpha_i$) entre le vecteur d'accélération ($\bar{b}_{ki}$) ou le vecteur de force mesurée et le vecteur normal ($\bar{n}_{ki}$) de la surface de pièce d'oeuvre est calculé au point de mesure ($\bar{p}_{ki}$) et un point de mesure est validé comme étant valable, lorsque l'angle dépasse une valeur prédéfinie vers le bas ou vers le haut.

**11.** Procédé selon l'une quelconque des revendications 1 à 10, **caractérisé en ce que** la vitesse de mesure maximale admissible est déterminée en tenant compte de la rigidité dynamique du palpeur et de la masse du palpeur.

**12.** Appareil de mesure de coordonnées comprenant

- une mécanique de mesure (3) déplaçable dans les trois directions de coordonnées avec une tête de palpage (9) fixée sur celle-ci, avec un palpeur (13), par le biais duquel la surface d'une pièce d'oeuvre (5) à mesurer est palpée en continu, la mécanique de mesure fournissant des valeurs de mesure correspondantes,
- une unité d'évaluation, dans laquelle les résultats de mesure sont évalués et corrigés, l'unité d'évaluation exécutant les opérations suivantes :

  - détermination du comportement dynamique en flexion du palpeur sous la forme d'un champ de paramètres unidimensionnels ou multidimensionnels, en particulier sous la forme d'un tenseur dynamique (D),
  - détermination des valeurs de correction à partir du champ de paramètres (D) en tenant compte de l'accélération du palpeur ($\bar{b}$)
  - correction des résultats de mesure avec les valeurs de correction,

  **caractérisé en ce que**,
  le champ de paramètres comprend le produit du tenseur de flexion statique ($N_T$) du palpeur par le tenseur de masse ($M_T + mE$) du palpeur.

**13.** Appareil de mesure de coordonnées selon la revendication 12, **caractérisé en ce que** l'unité d'évaluation convient à la réalisation des procédés cités aux revendications 1 à 11.

FIG. 1

27

$sp_{Taster}$

13

FIG. 3

27

13

$sp_{Taster}$

FIG. 4

FIG. 2

13

d

16

c

14

e

f

b

8

9

$\overrightarrow{w_M}$

FIG. 5

16

$\overrightarrow{w_{ges}}$

## FIG. 6

## FIG. 7

## FIG. 8

FIG. 9

FIG. 10

# FIG. 11

21

FIG. 12

FIG. 13